# EUROPEAN PATENT APPLICATION

(11) **EP 3 193 290 A1**
(43) Date of publication of application: **19.07.2017**
(21) Application number: 14854893.6
(22) Date of filing: 12.09.2014
(51) Int. Cl.: G06Q 10/08

(54) **LOGISTICS VERIFICATION SYSTEM AND METHOD**

(71) Applicant: Shenzhen Cifpay Network Bank Technology Co., Ltd., Shenzhen, Guangdong 518000 (CN)
(72) Inventor: ZHANG, Yi, Shenzhen Guangdong 518000 (CN)
(74) Representative: Office Kirkpatrick
(86) International application number: PCT/CN2014/086460
(87) International publication number: WO 2016/037367

(57) **Abstract**

A system and method for logistics verification are disclosed. In the logistics verification system, an identification information distribution center generates a pick-up code and pick-up verification information corresponding to the pick-up code, a sign-for code and sign-for verification information corresponding to the sign-for code. A logistics terminal sends the pick-up code to the pick-up terminal, the sign-for verification information to a delivery terminal. A supply terminal provides the goods after verifying the pick-up code according to the pick-up verification information. A pick-up terminal picks up the goods at the supply terminal depending on the pick-up code. A delivery terminal transports the goods from the delivering origin to the destination and verifies the sign-for code according to the sign-for verification information. Finally, a client terminal receives the goods at the destination depending on the sign-for code. Therefore, by the completed logistics flow and sound verification mechanism of goods pick-up and receiving, the security factor and reliability of logistics dispatch are increased. Meanwhile, by connecting the logistics verification system with a payment system, the automation and security of logistics process and payment process are improved, which leads to a highly automatic and intelligent trading mode.

## Description

### FIELD OF THE DISCLOSURE

The present disclosure relates to the field of internet, and more particularly, to a system and method for logistics verification.

### BACKGROUND OF THE DISCLOURE

With the rapid development of e-commerce (electronic commerce), people are beginning to have higher and higher requirements for logistics safety. However, in goods delivery, people have to reveal their true identity information and contact methods in order to achieve the purpose of goods dispatching. Also when the goods arrive at the destination, they are usually signed for or wrongly signed for by another person, or lost intentionally or unintentionally by couriers, which would inevitably make the buyer unable to receive the goods. At the same time, the logistics sign-for phase and the payment phase are still generally disjointed, in other words, the payment cannot be credited to the account automatically after the goods are signed for.

In addition, with the development of automation technology, the demands for the automation in e-commerce are also increasing. Therefore, an innovative system would be needed in logistics service to meet the demands of achieving automatic goods pick-up and dispatching, achieving the technical restraint of logistics service, improving the reliability and security of logistics service and achieving the automatic hooking of the logistics phase (sign-for phase) and the payment phase.

### SUMMARY OF THE DISCLOSURE

Because of the defective verification mechanism of goods pick-up and dispatching, low security factor, poor reliability and low degree of automation in logistics in the prior art, the present disclosure attempts to solve the technical problem by providing a system and method for logistics verification.

A technical solution the present disclosure adopts to solve the technical problem is:
a logistics verification system, comprising an identification information distribution center, a logistics terminal, a supply terminal, a client terminal, a pick-up terminal and a delivery terminal, wherein the identification information distribution center is respectively in communication connection with the logistics terminal, the supply terminal and the client terminal, the logistics terminal is respectively in communication connection with the pick-up terminal and the delivery terminal, the supply terminal is in a communication connection with the pick-up terminal, and the client terminal is in a communication connection with the delivery terminal;
the identification information distribution center is configured to generate a pick-up code and pick-up verification information corresponding to the pick-up code, a sign-for code and sign-for verification information corresponding to the sign-for code, and to further send the pick-up code and the sign-for verification information to the logistics terminal, the sign-for code to the client terminal, and the pick-up verification information to the supply terminal;
the logistics terminal is configured to send the received pick-up code to the pick-up terminal, the received sign-for verification information to the delivery terminal;
the supply terminal is configured to release the goods after verifying the pick-up code in accordance with the pick-up verification information;
the pick-up terminal is configured to pick up the goods at the supply terminal depending on the pick-up code, and dispatch the goods to the preset delivering origin;
the delivery terminal is configured to transport the goods from the delivering origin to the preset destination, and verify the sign-for code in accordance with the sign-for verification information;
the client terminal is configured to receive the goods at the destination depending on the sign-for code.

In said system of the present disclosure, the pick-up terminal is further configured to generate pick-up confirmation information and feed the pick-up confirmation information back to the logistics terminal after picking up the goods depending on the pick-up code;
the delivery terminal is further configured to generate sign-for confirmation information and feed the sign-for confirmation information back to the logistics terminal after verifying the sign-for code in accordance with the sign-for verification information.

In said system of the present disclosure, the logistics terminal is further configured to send the pick-up confirmation information and the sign-for confirmation information to the identification information distribution center.

In said system of the present disclosure, the pick-up terminal is further configured to obtain first geographical location information of the pick-up terminal and upload the first geographical location information to the logistics terminal in real time;
the delivery terminal is further configured to obtain second geographical location information and upload the second geographical location information to the logistics terminal in real time.

In said system of the present disclosure, the logistics terminal is further configured to synchronize the first geographical location information and the second geographical location information to the identification information distribution center in real time.

The present disclosure also provides a logistics verification method, which comprises the following steps:
A: generating by the identification information distribution center a pick-up code and pick-up verification information corresponding to the pick-up code, a sign-for code and sign-for verification information corresponding to the sign-for code, and sending the pick-up code and the sign-for verification information to the logistics terminal, the sign-for code to the client terminal, and the pick-up verification information to the supply terminal;
B: sending by the logistics terminal the received pick-up code to the pick-up terminal, and making by the pick-up terminal a request to receive the goods provided by the supply terminal depending on the pick-up code, and transferring by the pick-up terminal the goods to the delivery terminal after the supply terminal verifies the pick-up code in accordance with the pick-up verification information;
C: sending by the logistics terminal the received sign-for verification information to the delivery terminal, and delivering by the delivery terminal the goods to the preset destination and verifying the sign-for code of the client terminal according to the sign-for verification information in order to effectuate the client terminal to receive the goods.

In another method provided by the present disclosure, further comprising step D: after the step C, sending by the logistics terminal the pick-up confirmation information and the sign-for confirmation information to the identification information distribution center.

In the step B, the pick-up terminal obtains first geographical location information of the pick-up terminal and sends the first geographical location information to the logistics terminal in real time;
In another method provided by the present disclosure, further comprising: in the step C, the delivery terminal obtains second geographical location information of the delivery terminal and sends the second geographical location information to the logistics terminal in real time.

In another method provided by the present disclosure, further comprising step D: after the step C, synchronizing by the logistics terminal the first geographical location information and the second geographical location information to the identification information distribution center in real time.

The implementation of the logistics verification method disclosed by the present disclosure would provide the following benefits: through the employ of the logistics process of pick-up code and sign-for code by setting, the logistics terminal picks up the goods at the supply terminal depending on the pick-up code, the client terminal receives the goods depending on the sign-for code, that the situation where feigning pick-up and feigning sign-for can be avoided and automatic goods receiving and dispatching can be readily achieved, thus improving the verification mechanism of goods pick-up and dispatching for logistics, facilitating the goods intelligence, achieving the effect of concealing the true identity information and contact methods, and increasing the safety factor and reliability of logistics dispatch.

In addition, by connecting the logistics verification system with a payment system, the function can be realized that the payment can be automatically credited to the account after the goods have been checked and received.

### BRIEF DESCRIPTION OF THE DRAWINGS

FIG.1 is a schematic diagram of a logistics verification system according to the present disclosure.
FIG.2 is a flowchart diagram of a logistics verification method according to a first embodiment of the present disclosure.
FIG.3 is a flowchart diagram of a logistics verification method according to a second embodiment of the present disclosure.
FIG.4 is a flowchart diagram of a logistics verification method according to a third embodiment of the present disclosure.

### DETAILED DESCRIPTION OF THE DISCLOSURE

In order to have a better understanding of the technical features, technical objectives and technical effects of the present disclosure, a detailed description will be made on the embodiments of the present disclosure with reference to the attached drawings.

The present disclosure provides a system and method for logistics verification, an object of the present disclosure is to protect the user's true identity information and address information from being revealed directly in the logistics flow by providing different identity codes to different users. This system or method, on one hand, protects the privacy of each identity in the logistics flow, on the other hand, ensures the accuracy of goods pick-up and sign-for in the logistics flow.

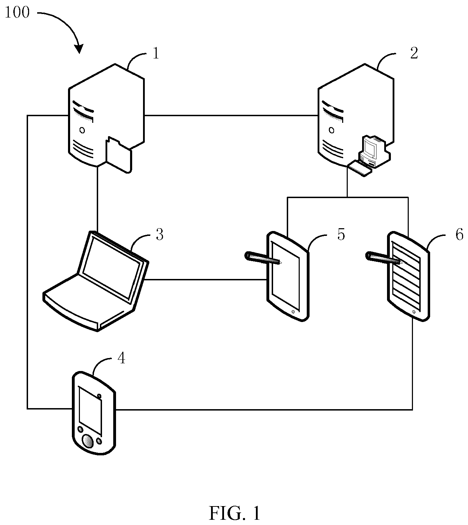

FIG. 1 is a schematic diagram of a logistics verification system according to one embodiment of the present disclosure. As is shown in FIG. 1, the logistics verification system 100 comprises an identification information distribution center 1, a logistics terminal 2, a supply terminal 3, a client terminal 4, a pick-up terminal 5 and a delivery terminal 6. Wherein, the identification information distribution center 1 is respectively in communication connection with the logistics terminal 2, the supply terminal 3 and the client terminal 4, the logistics terminal 2 is respectively in communication connection with the pick-up terminal 5 and the delivery terminal 6, the supply terminal 3 is in communication connection with the pick-up terminal 5, and the client terminal 4 is in communication connection with the delivery terminal 6.

The identification information distribution center 1 is configured to generate a pick-up code and pick-up verification information corresponding to the pick-up code, a sign-for code and sign-for verification information corresponding to the sign-for code, and send the pick-up code and the sign-for verification information to the logistics terminal 2, the sign-for code to the client terminal 4, and the pick-up verification information to the supply terminal 3. The identification information distribution center 1 may be set inside a logistics company or may be set up on other third-party trading platforms. By the setting of the identification information distribution center 1, unified management of the logistics flow from goods pick-up to delivery and to the final receipt can be achieved. It should be noted that, the pick-up code and the sign-for code mentioned herein are not limited to a particular string of numerical values, that they can also be in the form of a two-dimensional code or a short message, and generally any forms that can perform the information transmission to verify the identities of the picker and the receiver are all possible.

The logistics terminal 2 is configured to send the received pick-up code to the pick-up terminal 5 and send the received sign-for verification information to the delivery terminal 6. The logistics terminal 2 maybe a server set up inside the logistics company, which is configured to manage the process of goods pick-up and goods delivering. The pick-up terminal 5 and the delivery terminal 6 may be the terminals managed by the logistics terminal 2, in other words, the logistics company may let a pick-up personnel carry the pick-up terminal 5 and let a delivery personnel carry the delivery terminal 6 during the arrangement of picking-up personnel and delivery personnel. It should be noted that, the delivery terminal 6 may also be a fixed equipment directly set up in the delivering origin, or may merely be a data input port. Any forms of the delivery terminal 6 that being able to receive the sign-for verification information and verify the sign-for code are all feasible.

The supply terminal 3 is configured to verify the pick-up code according to the pick-up verification information and hand over the goods to the pick-up personnel holding the pick-up terminal.

The supply terminal 3 is generally set at a manufacturer, and the manufacturer may publish transaction information of goods and may also provide goods. The supply terminal 3 may also be set at a dealer. After obtaining the goods from the manufacturer, the dealer may cooperate with the identification information distribution center 1 in order to achieve the management of the whole logistics process.

The client terminal 4 is configured to enable the user holding the client terminal 4 to receive the goods at the destination depending on the sign-for code. Generally, the destination is the location of the client terminal 4, and the client terminal 4 can be achieved by form of software, which can be mounted on a mobile terminal held by the buyer in order to effectuate the receiving and verification of the sign-for code. Specifically, the client terminal 4 is mounted in the form of APP.

The pick-up terminal 5 is configured to pick up the goods depending on the pick-up code and transfer the goods to the delivery terminal 6. Generally, the picking-up personnel holds the pick-up terminal 5 and transfers the goods to the delivering origin according to preset logistics information after picking up the goods, and waits for the delivery personnel to take the goods away.

The delivery terminal 6 is configured to transport the goods from the delivering origin to the preset destination and verify the sign-for code in accordance with the sign-for verification information. For example, when the delivery personnel delivers the goods to the client, the delivery personnel may need to utilize the delivery terminal 6 to obtain the sign-for code provided by the client and simultaneously verify the sign-for code. When the buyer wishes to confirm the pick-up of the goods, he/she may activate the sign-for code through the delivery terminal 6 and thus obtain the corresponding goods from the delivery personnel. It should be appreciated that, when the buyer does not rush to pick up the goods, he/she may not activate the sign-for code but merely check whether the sign-for code is valid or effective, and obtain the goods depending on the sign-for code when needed.

It can be easily thought of that the delivery terminal 6 and the pick-up terminal 5 can be set as the same terminal, in other words, said same terminal can perform both the goods pick-up function and goods delivery function.

Typically, the pick-up terminal 5 may generate pick-up confirmation information after picking up the goods depending on the pick-up code, and at the same time, feed the pick-up confirmation information back to the logistics terminal 2.

The delivery terminal 6 may generate sign-for confirmation information after verification of the sign-for code according to the sign-for verification information, and feed the sign-for confirmation information back to the logistics terminal 2. In this way, the logistics terminal 2 can check the state of flow of the goods, i.e., the logistics terminal 2 can trace the flow process of the goods, which facilitates the monitoring of the goods and improves the safety and reliability of goods transport.

The logistics terminal 2 sends the pick-up confirmation information and the sign-for confirmation information to the identification information distribution center 1. Therefore, the state of flow of the goods can be checked through the identification information distribution center 1.

The client terminal 4 checks the state of flow of the goods through the identification information distribution center 1. Herein, this function is realized through the client terminal 4 by sending a client query request to the identification information distribution center 1, where the client query request may be an order number, therefore, the client terminal 4 can check the state of flow of the corresponding goods in accordance with the order number. The identification information distribution center 1 responds to this query request and returns the query results of the corresponding goods to the client terminal 4.

Similarly, the supply terminal 3 can also check the state of flow of the goods through the identification information distribution center 1. Herein, this function is realized through the supply terminal 3 by sending a supply query request to the identification information distribution center 1, where the supply query request may be an order number, therefore, the supply terminal 3 can check the state of flow of the corresponding goods in accordance with the order number. The identification information distribution center 1 responds to this query request and returns the query results of the corresponding goods to the supply terminal 3. Both the buyer and the seller can check the state of flow of the goods.

It should be noted that, the query herein is not limited to the query based on the order number, queries based on a user-name or other available manners are also feasible.

Typically, the pick-up terminal 5 is further configured to obtain first geographical location information of the pick-up terminal 5 and upload the first geographical location information to the logistics terminal 2 in real time. The pick-up terminal 5 may be equipped with a positioning module therein, where the positioning module is provided with GPS (global position system) capabilities in order to obtain the first geographical location information.

The pick-up terminal 6 is further configured to obtain second geographical location information of the pick-up terminal 6 and upload the second geographical location information to the logistics terminal 2 in real time. The pick-up terminal 6 may be equipped with a positioning module therein, where the positioning module is provided with GPS capabilities in order to obtain the second geographical location information. By uploading the geographical location information in real time to the logistics terminal 2, the logistics terminal 2 can be enabled to check the state of flow of the goods in real time. With reference to the real-time state of logistics flow, the dispatch and delivery of the goods can be arranged more reasonably.

The logistics terminal 2 is further configured to send the first geographical location information and the second geographical location information to the identification information distribution center 1 in real time. Thus, the state of flow of the goods can be checked in real time through the identification information distribution center 1.

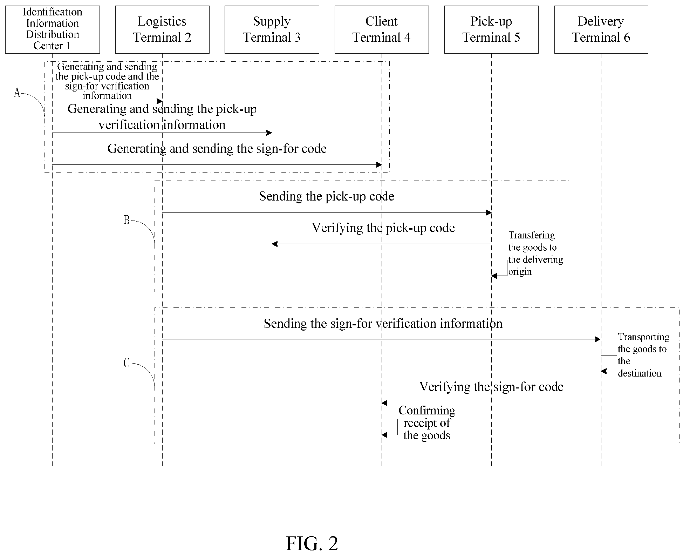

FIG. 2 is a flow chart diagram of a logistics verification method according to a first embodiment of the present disclosure. As is shown in FIG. 2, this method adopts the logistics verification system as shown in FIG. 1, and specifically comprises the following steps:
A: generating by the identification information distribution center 1 a pick-up code and pick-up verification information corresponding to the pick-up code, a sign-for code and sign-for verification information corresponding to the sign-for code, and sending the pick-up code and the sign-for verification information to the logistics terminal 2, the sign-for code to the client terminal 4, and the pick-up verification information to the supply terminal 3. That is to say, it is necessary before the flow of the goods that the identification information distribution center 1 needs to generate the corresponding pick-up code and the pick-up verification information corresponding to the pick-up code, the corresponding sign-for code and the sign-for verification information corresponding to the sign-for code.
B: sending by the logistics terminal 2 the received pick-up code to the pick-up terminal 5, and making by the pick-up terminal 5 a request to receive the goods provided by the supply terminal 3 depending on the pick-up code, and transferring by the pick-up terminal 5 the goods to the delivery terminal 6 after the supply terminal 3 verifies the pick-up code according to the pick-up verification information. Generally, after the goods have been transferred to the preset delivering origin, a delivery personnel holding the delivery terminal would be expected to take the goods away. For example, the pick-up personnel holding the pick-up terminal 5 picks up the goods at the supply depending on the pick-up code after receiving the pick-up code, the supply utilizes the supply terminal 3 to verify the pick-up code, thus allowing the pick-up personnel to transfer the goods to the delivery terminal 6. Generally, both the initial locations of the delivery terminal 6 and the pick-up terminal 5 are at the logistics terminal 2.
C: sending by the logistics terminal 2 the received sign-for verification information to the delivery terminal 6, and leading by the delivery terminal the goods to the destination and verifying the sign-for code provided by the client terminal 4 according to the sign-for verification information in order to effectuate the client 4 to receive the goods. For example, the destination is the location of the client terminal 4, the delivery personnel holding the delivery terminal 6 delivers the goods to the client holding the client terminal 4, the client receives the goods depending on the sign-for code in the client terminal 4, and the delivery personnel utilizes the delivery terminal 6 to verify and activate the sign-for code and then passes on the goods to the client.

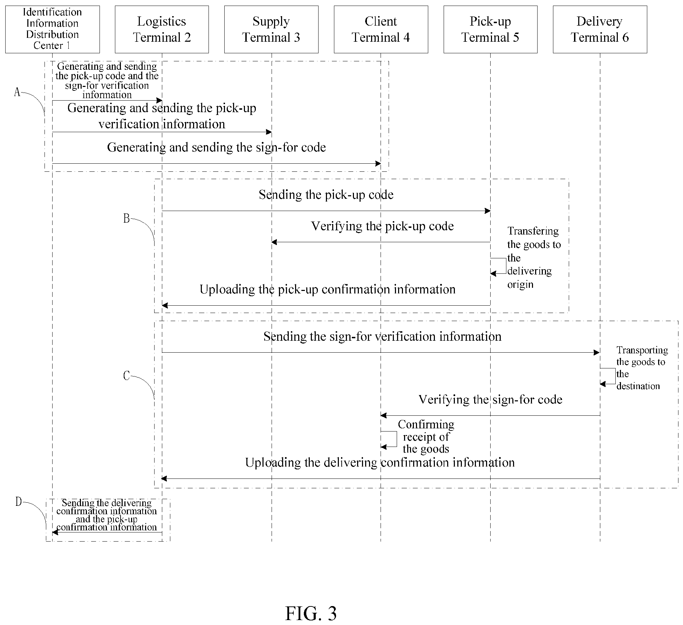

FIG. 3 is a flow chart diagram of a logistics verification method according to a second embodiment of the present disclosure. As is shown in FIG. 3, the difference between this embodiment and the first embodiment is that, in the above mentioned step B, the pick-up terminal 5 generates pick-up confirmation information after taking delivery of the goods depending on the pick-up code, and feeds the pick-up confirmation information back to the logistics terminal 2. Typically, the supply terminal 3 generates pick-up confirmation information after providing and handing over the goods, and feeds the pick-up confirmation information to the identification information distribution center 1.

In the above mentioned step C, the delivery terminal 6 generates sign-for confirmation information and feeds back the sign-for confirmation information to the logistics terminal 2 after the delivery terminal 6 verifies the sign-for code according to the sign-for verification information. In this way, the logistics terminal 2 is capable of checking the state of flow of the goods, or in other words, tracing the flow process of the goods. Typically, the client terminal 4 generates sign-for confirmation information and feeds back the sign-for confirmation information to the identification information distribution center 1 after receiving the goods depending on the sign-for code.

This method further comprises step D:
D: after the step C, sending by the logistics terminal 2 the pick-up confirmation information and the sign-for confirmation information to the identification information distribution center 1. Thus, the state of flow of the goods can be checked in real time through the identification information distribution center 1. Typically, the client terminal 4 checks the state of flow of the goods through the identification information distribution center 1. Herein, this function is realized through the client terminal 4 by sending a client query request to the identification information distribution center 1, where the client query request may be an order number, therefore, the client terminal 4 can check the state of flow of the corresponding goods in accordance with the order number. The identification information distribution center 1 responds to the query request and returns the query results of the corresponding goods to the client terminal 4.

Similarly, the supply terminal 3 can also check the state of flow of the goods through the identification information distribution center 1. Herein, this function is realized through the supply terminal 3 by sending a supply query request to the identification information distribution center 1, where the supply query request may be an order number, therefore, the supply terminal 3 can check the state of flow of the corresponding goods in accordance with the order number. The identification information distribution center 1 responds to this query request and returns the query results of the corresponding goods to the supply terminal 3. Both the buyer and the seller can check the state of flow of the goods.

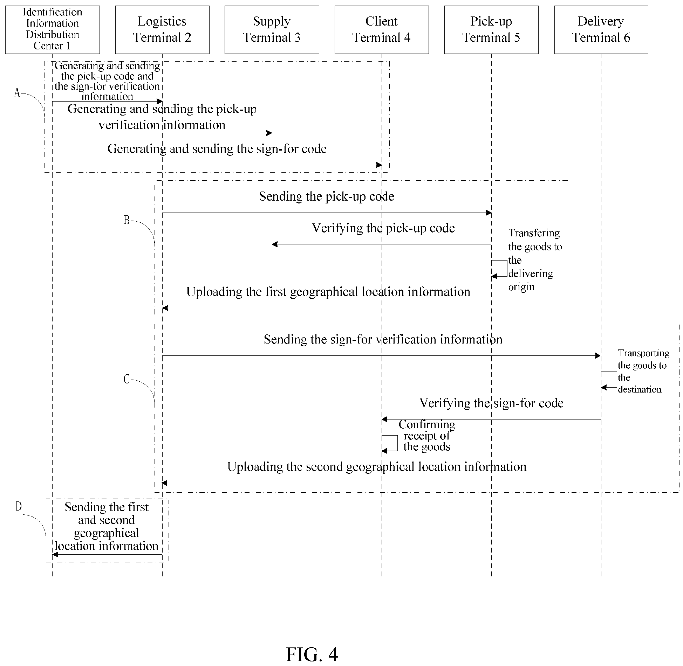

FIG. 4 is a flow chart diagram of a logistics verification method according to a third embodiment of the present disclosure. As is shown in FIG. 4, the difference between this embodiment and the second embodiment is that, in the above mentioned step B, the pick-up terminal 5 obtains first geographical location information of the pick-up terminal 5 and sends the first geographical location information to the logistics terminal 2 in real time. The pick-up terminal 5 may be disposed with a positioning module therein, where the positioning module is provided with GPS capabilities in order to obtain the first geographical location information.

In the above mentioned step C, the delivery terminal 6 obtains second geographical location information of the delivery terminal 6 and sends the second geographical location information to the logistics terminal 2 in real time. The pick-up terminal 6 may be equipped with a positioning module therein, where the positioning module is provided with GPS capabilities in order to obtain the second geographical location information. By uploading the first and second geographical location information to the logistics terminal 2 in real time, the logistics terminal 2 can be enabled to check the state of flow of the goods in real time. With reference to the real-time state of flow, the dispatch and delivery of the goods can be arranged more reasonably.

This method further comprises step D:
D: after the above mentioned step C, sending by the logistics terminal 2 the first geographical location information and the second geographical location information to the identification information distribution center 1 in real time. Thus, the state of flow of the goods can be checked in real time through the identification information distribution center 1. Typically, the client terminal 4 checks the state of flow of the goods through the identification information distribution center 1. Herein, this function is realized through the client terminal 4 by sending a client query request to the identification information distribution center 1, where the client query request may be an order number, therefore, the client terminal 4 can check the state of flow of the corresponding goods in accordance with the order number. The identification information distribution center 1 responds to this query request and returns the real-time query results of the corresponding goods to the client terminal 4. The supply terminal 3 can also check the real-time state of flow of the goods through the identification information distribution center 1. Herein, this function is realized through the supply terminal 3 by sending a supply query request to the identification information distribution center 1, where the supply query request may be an order number, therefore, the supply terminal 3 can check the state of flow of the corresponding goods in accordance with the order number. The identification information distribution center 1 responds to this real-time query request and returns the query results of the corresponding goods to the client terminal 3. Thus, both the buyer and the seller can check the state of flow of the goods.

The description is made above on the embodiments of the present disclosure with reference to the attached drawings, but the present disclosure is not limited to the particular embodiments described above which are merely illustrative and not restrictive. Any modifications that are made by an ordinary skill in the art in light of the present disclosure without departing from the spirit of the present disclosure and protecting scope of the claims shall all be covered within the scope of the present disclosure.

## Claims

1. A logistics verification system, comprising an identification information distribution center, a logistics terminal, a supply terminal, a client terminal, a pick-up terminal and a delivery terminal, wherein the identification information distribution center is respectively in communication connection with the logistics terminal, the supply terminal, and the client terminal, the logistics terminal is respectively in communication connection with the pick-up terminal and the delivery terminal, the supply terminal is in communication connection with the pick-up terminal, and the client terminal is in communication connection with the delivery terminal; and
the identification information distribution center is configured to generate a pick-up code and pick-up verification information corresponding to the pick-up code, a sign-for code and sign-for verification information corresponding to the sign-for code, and send the pick-up code and the sign-for verification information to the logistics terminal, the sign-for code to the client terminal, and the pick-up verification information to the supply terminal;
the logistics terminal is configured to send the received pick-up code to the pick-up terminal and send the received sign-for verification information to the delivery terminal;
the supply terminal is configured to release the goods after verifying the pick-up code according to the pick-up verification information;
the pick-up terminal is configured to transfer the goods to the delivery terminal after picking up the goods at the supply terminal depending on the pick-up code;
the delivery terminal is configured to transport the goods from a delivering origin to the preset destination and verify the sign-for code according to the sign-for verification information;
the client terminal is configured to receive the goods at the destination depending on the sign-for code.

2. The logistics verification system of claim 1, wherein the pick-up terminal is further configured to generate pick-up confirmation information and feed back the pick-up confirmation information to the logistics terminal after receiving the goods depending on the pick-up code; the delivery terminal is further configured to generate sign-for confirmation information and feed back the sign-for confirmation information to the logistics terminal after verifying the sign-for code according to the sign-for verification information.

3. The logistics verification system of claim 2, wherein the logistics terminal is further configured to send the pick-up confirmation information and the sign-for confirmation information to the identification information distribution center.

4. The logistics verification system of claim 1, wherein the pick-up terminal is further configured to obtain first geographical location information of the pick-up terminal and send the first geographical location information to the logistics terminal in real time; the delivery terminal is further configured to obtain second geographical location information of the delivery terminal and send the second geographical location information to the logistics terminal in real time.

5. The logistics verification system of claim 4, wherein the logistics terminal is further configured to synchronize the first geographical location information and the second geographical location information to the identification information distribution center in real time.

6. A logistics verification method providing the logistics verification system as claimed in claim 1, comprising the following steps:
A: generating by the identification information distribution center a pick-up code and pick-up verification information corresponding to the pick-up code, a sign-for code and sign-for verification information corresponding to the sign-for code, and sending the pick-up code and the sign-for verification information to the logistics terminal, the sign-for code to the client terminal, and the pick-up verification information to the supply terminal;
B: sending by the logistics terminal the received pick-up code to the pick-up terminal, and making by the pick-up terminal a request to receive the goods provided by the supply terminal depending on the pick-up code, and transferring by the pick-up terminal the goods to the delivery terminal after the supply terminal verifies the pick-up code according to the pick-up verification information;
C: sending by the logistics terminal the received sign-for verification information to the delivery terminal, and leading by delivery terminal the goods to the destination and verifying the sign-for code provided by the client terminal 4 according to the sign-for verification information in order to effectuate the client to receive the goods.

7. The logistics verification method of claim 6, wherein in the step B, the pick-up terminal generates pick-up confirmation information and feeds back the pick-up confirmation information to the logistics terminal after receiving the goods depending on the pick-up code; wherein in the step C, the delivery terminal generates sign-for confirmation information and feeds back the sign-for confirmation information to the logistics terminal after verifying the sign-for code according to the sign-for verification information.

8. The logistics verification method of claim 7, further comprising step D:
after the step C, sending by the logistics terminal the pick-up confirmation information and the sign-for confirmation information to the identification information distribution center.

9. The logistics verification method of claim 6, wherein in the step B, the pick-up terminal obtains first geographical location information of the pick-up terminal and send the first geographical location information to the logistics terminal in real time; wherein in the step C, the delivery terminal obtains second geographical location information of the delivery terminal and sends the second geographical location information to the logistics terminal in real time.

10. The logistics verification method of claim 9, further comprising step D:
after the step C, synchronizing by the logistics terminal the first geographical location information and the second geographical location information to the identification information distribution center in real time.
